# EUROPÄISCHE PATENTSCHRIFT

(11) **EP 1 902 256 B1**
(45) Veröffentlichungstag und Bekanntmachung des Hinweises auf die Patenterteilung: **02.05.2012**
(21) Anmeldenummer: 06755151.5
(22) Anmeldetag: 11.05.2006
(51) Int. Cl.: F24C 15/16, F16C 29/00, A47B 88/14

(54) **TELESKOPAUSZUGSVORRICHTUNG FÜR EIN HAUSGERÄT**
TELESCOPIC EXTENSION UNIT FOR A DOMESTIC APPLIANCE
DISPOSITIF DE SORTIE TELESCOPIQUE POUR UN APPAREIL ELECTROMENAGER

(30) Priorität: 21.06.2005 DE 102005028673
(43) Veröffentlichungstag der Anmeldung: 26.03.2008
(73) Patentinhaber: BSH Bosch und Siemens Hausgeräte GmbH, 81739 München (DE)
(72) Erfinder: BRUNNER, Martin, 75172 Pforzheim (DE); HERBOLSHEIMER, Jochen, 83308 Trostberg (DE); HINTERMAYER, Manfred, 76185 Karlsruhe (DE)
(86) Internationale Anmeldenummer: PCT/EP2006/062239
(87) Internationale Veröffentlichungsnummer: WO 2006/136481

(56) Entgegenhaltungen:
- EP-A- 1 393 654
- DE-A1- 3 019 367
- DE-A1- 19 911 312
- DE-A1- 19 949 239
- US-A- 4 988 214

## Beschreibung

Die Erfindung geht aus von einer Teleskopauszugsvorrichtung nach dem Oberbegriff des Anspruchs 1 und von einem Gargerät nach dem Oberbegriff des Anspruchs 9.

Aus der EP 1 014 004 B1 ist eine Teleskopauszugsvorrichtung für ein Backofenauszugssystem mit wenigstens zwei Teleskopschienen und mit einem Kugelkäfig zum Lagern von Wälzkörpern bekannt. Die Wälzkörper sind dazu vorgesehen, sich während einer Auszugsbewegung und während einer Einschubbewegung an den Teleskopschienen abzuwälzen. Die Wälzkörper dienen gleichzeitig als Endanschlag zum Begrenzen der Auszugsbewegung und sind daher einer großen Beschädigungsgefahr ausgesetzt.

Weitere Teleskopauszugsvorrichtungen sind in der DE 199 11 312 A1 und in der US-A-4 988 214 offenbart. Der Erfindung liegt insbesondere die Aufgabe zugrunde, eine gattungsgemäße Teleskopauszugsvorrichtung mit einem höheren Bedienkomfort und mit einer verlängerten Lebensdauer auszustatten.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Teleskopauszugsvorrichtung für ein Hausgerät, insbesondere für ein Backofenauszugssystem, mit wenigstens zwei Teleskopschienen und mit einem Kugelkäfig zum Lagern von Wälzkörpern, die dazu vorgesehen sind, sich während einer Auszugs- bzw. Einschubbewegung an den Teleskopschienen abzuwälzen.

Es wird vorgeschlagen, dass der Kugelkäfig dazu vorgesehen ist, unter Umgehung der Wälzörper als Endanschlag zum Begrenzen der Auszugsbewegung zu wirken. Dadurch wird eine unmittelbare Kraftübertragung über den Kugelkäfig erreicht und die Wälzkörper werden durch das Vermeiden von auf die Wälzkörper wirkenden Stoßbelastungen geschont. Die Teleskopauszugsvorrichtung umfasst zumindest ein Dämpfungselement zum Dämpfen eines beim Erreichen des Endanschlags entstehenden Kraftstoßes, wodurch ein erhöhter Bedienkomfort und eine Geräuschreduktion erreicht werden. Das Dämpfungselement ist als Kunststoffüberzug des Kugelkäfigs ausgebildet. Die Dämpfungsfunktion kann so in den Endanschlag integriert werden, die in die Wälzkörper nur unter einer Erhöhung des Rollwiderstands integrierbar wäre. Ferner können die Wälzkörper durch die vermieden Stoßbelastung im Hinblick auf den Rollwiderstand, die Temperaturbeständigkeit, die Herstellungskosten und die Abnutzung bzw. im Hinblick auf jede, dem Fachmann als sinnvoll erscheinende Kombination dieser Eigenschaften optimiert werden, ohne dass auf eine Stoßbelastbarkeit der Wälzkörper Rücksicht genommen werden müsste. Eine der Teleskopschienen kann von einem fest mit dem Hausgerät verbundenen Trägerelement gebildet sein.

Unter "vorgesehen" soll in diesem Zusammenhang auch "ausgelegt" und "ausgestattet" verstanden werden.

In einer Weiterbildung der Erfindung wird vorgeschlagen, dass der Kugelkäfig dazu vorgesehen ist, einen beim Erreichen des Endanschlags entstehenden Kraftstoß von der ersten Teleskopschiene auf die zweite Teleskopschiene zu übertragen. Dadurch kann ein kontrollierter Kraftfluss unter Umgehung der Wälzkörper erreicht werden. Es sind prinzipiell auch Ausgestaltungen der Erfindung denkbar, in denen der Kugelkäfig nur im Sinne einer Erhöhung eines Reibungswiderstands mit den Teleskopschienen zusammenwirkt, so dass höchstens ein abgeschwächter Kraftstoß entsteht.

Weisen die Teleskopschienen Anschlagelemente zum Begrenzen der Auszugs- und/oder Einzugsbewegung auf, ist ein Einleiten des beim Erreichen des Endanschlags entstehenden Kraftstoßes in die Teleskopschienen besonders einfach möglich. Die Anschlagelemente können fest an die Teleskopschienen angeformt, fest mit diesen verbunden oder aber verstellbar ausgebildet sein.

Ein geringer Rollwiderstand bei hoher Hitzebeständigkeit, Spülmaschinenfestigkeit und langer Lebensdauer ist erreichbar, wenn zumindest ein Element des von den Wälzkörpern erzeugten Wälzlagers von einem selbstschmierenden Funktionswerkstoff gebildet ist. Solche Funktionswerkstoffe können beispielsweise Gussmaterialien mit hohem Graphitgehalt, kunststoffgefüllte Metalle, Keramiken oder Ähnliches sein.

Eine sichere, spielfreie Lagerung der Wälzkörper ist erreichbar, wenn der Kugelkäfig zumindest eine von einem Wälzkörper durchgriffene Öffnung umfasst, die einen laschenförmig umgebogenen Rand zum Stützen des Wälzkörpers aufweist.

Ein Verklemmen der Wälzkörper kann vermieden werden, wenn die Wälzkörper als Kugeln ausgebildet sind.

Eine besonders komfortable, in mehrere Richtungen belastbare Teleskopauszugsvorrichtung ist erreichbar, wenn die erste Teleskopschiene über die Wälzkörper in zumindest zwei verschiedenen Richtungen an der zweiten Teleskopschiene abgestützt ist. Besonders vorteilhaft sind Ausgestaltungen der Erfindung, in denen die erste Teleskopschiene über die Wälzkörper in vier um etwa 90° verschiedene Richtungen an der zweiten Teleskopschiene abgestützt ist.

Ferner betrifft die Erfindung ein Hausgerät, insbesondere ein Gargerät, mit einer gattungsgemäßen Teleskopauszugsvorrichtung. Durch den Einsatz der Teleskopauszugsvorrichtung in einem Hausgerät kommen ihre hohe Temperaturbeständigkeit und Spülmaschinenfestigkeit besonders gewinnbringend zum Tragen.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Gargerät mit einem Backofenauszugssystem, das mehrere Teleskopauszugsvorrichtungen umfasst und

- Fig. 2: eine der Teleskopauszugsvorrichtungen aus Figur 1 in einer schematischen Darstellung.

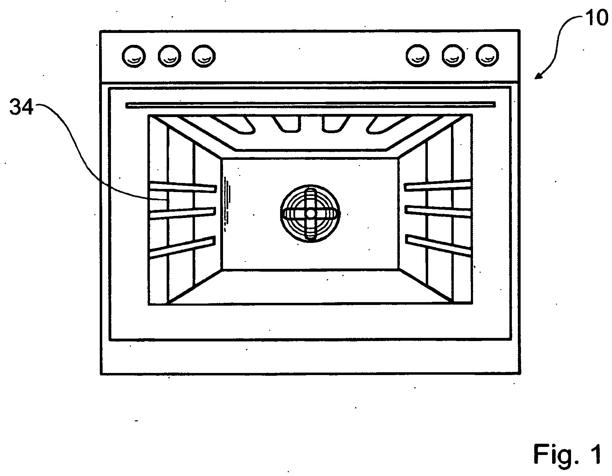

Figur 1 zeigt ein als Haushaltsbackofen ausgebildetes Hausgerät 10 mit einem System von jeweils drei an den Seiten einer Backofenmuffel auf einem Gitter 34 angeordneten Teleskopauszugsvorrichtungen. Jeweils ein Paar von Teleskopauszugsvorrichtungen mit gleicher Höhe ist zum Tragen eines hier nicht explizit dargestellten Gargutträgers vorgesehen. Die beiden seitlich angeordneten Gitter sind zum Reinigen lösbar und können zusammen mit den daran befestigten Teleskopauszugsvorrichtungen in eine Spülmaschine eingelegt werden.

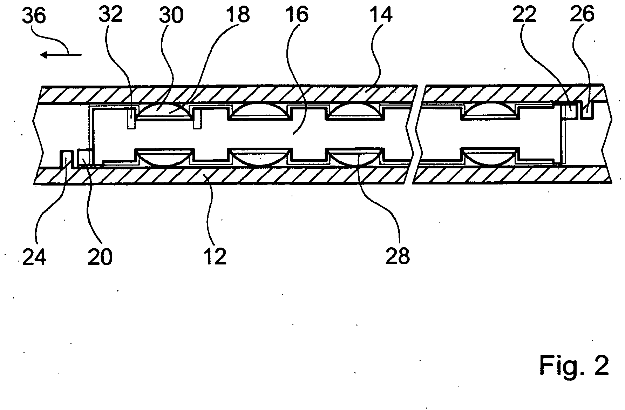

Jede der Teleskopauszugsvorrichtungen umfasst eine untere Teleskopschiene 12 und eine obere Teleskopschiene 14 sowie einen Kugelkäfig 16, in dem jeweils eine Vielzahl von als Kugeln ausgebildeten Wälzkörpern 18 gehalten ist (Figur 2). Während einer Auszugsbewegung und während einer Einschubbewegung wälzen sich die Wälzkörper 18 an beiden Teleskopschienen 12, 14 ab und erzeugen auf diese Weise ein reibungsarmes Wälzlager.

An jeder der Teleskopschienen 12, 14 sind jeweils zwei Anschlagelemente 24, 26 angeformt, welche die Auszugsbewegung und die Einschubbewegung begrenzen, wobei in der Figur 2 nur die zwei Anschlagelemente 24, 26 zum Begrenzen der Auszugsbewegung explizit dargestellt sind. Ein in einer Auszugsrichtung 36 vorderer, unterer und ein hinterer, oberer Rand des Kugelkäfigs 16 sind jeweils mit einem Dämpfungselement 20, 22 aus einem hochtemperaturbeständigen, elastischen Kunststoff ausgestattet. Die Dämpfungselemente 20, 22 schlagen am Ende der Auszugsbewegung an die Anschlagelemente 24, 26 an, so dass der Kugelkäfig 16 über die Dämpfungselemente 20, 22 und die Anschlagelemente 24, 26 unter Umgehung der Wälzkörper 18 als Endanschlag zum Begrenzen der Auszugsbewegung mit den beiden Teleskopschienen 12, 14 zusammenwirkt. Dabei wird ein beim Erreichen des Endanschlags entstehender Kraftstoß über den Kugelkäfig 16 von der ersten Teleskopschiene 12 auf die zweite Teleskopschiene 14 übertragen, ohne dass die Wälzkörper 18 einer Stoßbelastung ausgesetzt wären. Der Kraftstoß ist zudem durch die Dämpfungselemente 20, 22 gedämpft.

In weiteren Ausgestaltungen der Erfindung können die Dämpfungselemente entfallen und/oder durch Federelemente ergänzt oder ersetzt werden. Die Federelemente können auch von den Dämpfungselementen gebildet sein, wenn diese neben dämpfenden Eigenschaften auch elastische Eigenschaften haben. Auch der Kugelkäfig 16 selbst kann dämpfende Eigenschaften haben und daher selbst ein Dämpfungselement bilden, so dass separate Dämpfungselemente entfallen können.

Der Kugelkäfig 16 ist aus Stahlblech ausgebildet und weist eine Vielzahl von Öffnungen 30 auf, die von den Wälzkörpern 18 teilweise durchgriffen sind. Jede der Öffnungen 30 hat einen laschenförmig umgebogenen Rand 32, der durch seine schalenförmige Ausformung zum großflächigen Stützen des Wälzkörpers 18 dient.

In einer weiteren alternativen Ausgestaltung der Erfindung ist der Kugelkäfig 16 mit einer Kunststoffschicht umgeben, die graphitgefüllte Poren aufweist und die in Figur 2 gestrichelt dargestellt ist. Die Kunststoffschicht bildet daher ein von einem selbstschmierenden Funktionswerkstoff gebildetes Element 28 des von den Wälzkörpern 18 erzeugten Wälzlagers, das eine spülmaschinenfeste Schmierung der Teleskopauszugsvorrichtung gewährleistet. Die Kunststoffschicht bzw. das Element 28 kann zudem die Dämpfungseigenschaften des Kugelkäfigs 16 verbessern.

### Bezugszeichen

- 10: Hausgerät
- 12: Teleskopschiene
- 14: Teleskopschiene
- 16: Kugelkäfig
- 18: Wälzkörper
- 20: Dämpfungselement
- 22: Dämpfungselement
- 24: Anschlagselement
- 26: Anschlagelement
- 28: Element
- 30: Öffnung
- 32: Rand
- 34: Gitter
- 36: Auszugsrichtung

## Patentansprüche

1. Teteskopauszugsvorrichtung für ein Hausgerät (10), insbesondere für ein Backofenauszugssystem, mit wenigstens zwei Teleskopschienen (12, 14) und mit einem Kugelkäfig (16) in dem Wälzkörper (18) gelagert sind, wobei die Wälzkörper dazu vorgesehen sind, sich während einer Auszugsbewegung und/oder Einschubbewegung an den Teleskopschienen (12, 14) abzuwälzen, wobei der Kugelkäfig (16) dazu vorgesehen ist, unter Umgehung der Wälzkörper (18) als Endanschlag zum Begrenzen der Auszugsbewegung und/oder Einschubbewegung zu wirken, **dadurch gekennzeichnet, dass** der Kugelkäfig (16) einen Kunststoffüberzug aufweist und dass die Teleskopauszugsvorrichtung zumindest ein Dämpfungselement (20, 22) zum Dämpfen eines beim Erreichen des Endanschlags entstehenden Kraftstoßes umfasst.

2. Teleskopauszugsvorrichtung nach Anspruch 1, **dadurch gekennzeichnet, dass** der Kugelkäfig (16) dazu vorgesehen ist, einen beim Erreichen des Endanschlags entstehenden Kraftstoß von der ersten Teleskopschiene (12) auf die zweite Teleskopschiene (14) zu übertragen.

3. Teleskopauszugsvorrichtung nach einem der vorhergehenden Ansprüche, **dadurch gekennzeichnet, dass** die Teleskopschienen (12, 14) Anschlagelemente (24, 26) zum Begrenzen der Auszugsbewegung und/oder der Einzugsbewegung aufweisen.

4. Teleskopauszugsvorrichtung nach einem der vorhergehenden Ansprüche, **dadurch gekennzeichnet, dass** zumindest ein Element (28) des von den Wälzkörpern (18) erzeugten Wälzlagers von einem selbstschmierenden Funktionswerkstoff gebildet ist.

5. Teleskopauszugsvorrichtung nach einem der vorhergehenden Ansprüche, **dadurch gekennzeichnet, dass** der Kugelkäfig (16) zumindest eine von einem Wälzkörper (18) durchgriffene Öffnung (30) umfasst, die einen laschenförmig umgebogenen Rand (32) zum Stützen des Wälzkörpers (18) aufweist.

6. Teleskopauszugsvorrichtung nach einem der vorhergehenden Ansprüche, **dadurch gekennzeichnet, dass** die Wälzkörper (18) als Kugeln ausgebildet sind.

7. Teleskopauszugsvorrichtung nach einem der vorhergehenden Ansprüche, **dadurch gekennzeichnet, dass** die erste Teleskopschiene (12) über die Wälzkörper (18) in zumindest zwei verschiedenen Richtungen an der zweiten Teleskopschiene (14) abgestützt ist.

8. Hausgerät mit einer Teleskopauszugsvorrichtung nach einem der vorhergehenden Ansprüche.

## Claims

1. Telescopic pull-out device for a domestic appliance (10), particularly for a baking oven drawer system, comprising at least two telescopic rails (12, 14) and a ball cage (16) in which rollable bodies (18) are mounted, wherein the rollable bodies are provided for the purpose of rolling movement during a pulling-out and/or pushing-in movement at the telescopic rails (12, 14), wherein the ball cage (16) is provided for the purpose of acting as an end abutment for limitation of the pull-out movement and/or push-in movement with bypassing of the rollable bodies (18), **characterised in that** the ball cage (16) has a synthetic material coating and that the telescopic pull-out device comprises at least one damping element (20, 22) for damping a force impact occurring on reaching the end abutment.

2. Telescopic pull-out device according to claim 1, **characterised in that** the ball cage (16) is provided for the purpose of transmitting a force impact, which arises on reaching the end abutment, from the first telescopic rail (12) to the second telescopic rail (14).

3. Telescopic pull-out device according to one of the preceding claims, **characterised in that** the telescopic rails (12, 14) comprise end abutments (24, 26) for limiting the pull-out movement and/or push-in movement.

4. Telescopic pull-out device according to any one of the preceding claims, **characterised in that** at least one element (28) of the rolling bearing produced by the rollable bodies (18) is formed by a self-lubricating functional material.

5. Telescopic pull-out device according to any one of the preceding claims, **characterised in that** the ball cage (16) has at least one opening (30) through which a rollable body (18) engages and which has an edge (32) bent over in strap shape for supporting the rollable body (18).

6. Telescopic pull-out device according to any one of the preceding claims, **characterised in that** the rollable bodies (18) are constructed as balls.

7. Telescopic pull-out device according to any one of the preceding claims, **characterised in that** the first telescopic rail (12) is supported by way of the rollable bodies (18) at the second telescopic rail (14) in at least two different directions.

8. Domestic appliance with a telescopic pull-out device according to any one of the preceding claims.

## Revendications

1. Dispositif d'extraction télescopique pour un appareil ménager (10), notamment un pour un système d'extraction pour four, comprenant au moins deux rails télescopiques (12, 14) et comprenant une cage à billes (16) dans laquelle sont logés des organes de roulement (18), les organes de roulement étant ménagés pour rouler sur les rails télescopiques (12, 14) pendant un mouvement d'extraction et/ou un mouvement de rentrée, la cage à billes (16) étant ménagée pour agir en tant que butée de fin de course pour délimiter le mouvement d'extraction et/ou le mouvement de rentrée en by-passant les organes de roulement (18), **caractérisé en ce que** la cage à billes (16) présente un revêtement plastique et **en ce que** le dispositif d'extraction télescopique comprend au moins un élément d'atténuation (20, 22) pour atténuer un choc de force se produisant lorsque la butée de fin de course est atteinte.

2. Dispositif d'extraction télescopique selon la revendication 1, **caractérisé en ce que** la cage à billes (16) est ménagée pour transférer un choc de force, se produisant lorsque la butée de fin de course est atteinte, du premier rail télescopique (12) sur le deuxième rail télescopique (14).

3. Dispositif d'extraction télescopique selon l'une quelconque des revendications précédentes, **caractérisé en ce que** les rails télescopiques (12, 14) présentent des éléments de butée (24, 26) pour délimiter le mouvement d'extraction et/ou le mouvement de rentrée.

4. Dispositif d'extraction télescopique selon l'une quelconque des revendications précédentes, **caractérisé en ce qu'**au moins un élément (28) du palier à roulement réalisé par les corps de roulement (18) est formé par un matériau fonctionnel autolubrifiant.

5. Dispositif d'extraction télescopique selon l'une quelconque des revendications précédentes, **caractérisé en ce que** la cage à billes (16) comprend au moins une ouverture (30) traversée par un organe de roulement (18), laquelle présente un bord (32) arqué en forme de languette pour soutenir l'organe de roulement (18).

6. Dispositif d'extraction télescopique selon l'une quelconque des revendications précédentes, **caractérisé en ce que** les organes de roulement (18) sont réalisés en tant que billes.

7. Dispositif d'extraction télescopique selon l'une quelconque des revendications précédentes, **caractérisé en ce que** le premier rail télescopique (12) est soutenu sur le deuxième rail télescopique (14) dans au moins deux directions différentes par l'intermédiaire des organes de roulement (18).

8. Appareil ménager comprenant un dispositif d'extraction télescopique selon l'une quelconque des revendications précédentes.
